# EUROPEAN PATENT APPLICATION

(11) **EP 1 964 650 A1**
(43) Date of publication of application: **03.09.2008**
(21) Application number: 07425109.1
(22) Date of filing: 01.03.2007
(51) Int. Cl.: B25J 9/16

(54) **Integrated optical microsystem for communication and sensing in microrobots operating in multi-agent systems or swarms and mass-fabrication method therefor**

(71) Applicant: Scuola Superiore di Studi Universitari e di Perfezionamento Sant'Anna, 56125 Pisa (IT)
(72) Inventor: Corradi, Paolo, 42100 Reggio Emilia (IT); Menciassi, Arianna, 56020 Pontedera (Pisa) (IT); Dario, Paolo, 57100 Livorno (IT)
(74) Representative: Bardini, Marco Luigi

(57) **Abstract**

An integrated optical microsystem for communication and sensing to be applied into autonomous mobile microrobots belonging to multi-agent systems or swarms, comprising of a substrate (7) suitable to be mounted on the microrobot, a plurality of sensing units (8, 9) electrically controlled and arranged along the borders of the substrate and reflective surfaces (11) arranged on the substrate in correspondence of each sensing unit and aimed to deflect towards these units the input signals and to deflect out the signal emitted by these units. A method to mass produce the optical microsystem is described.

## Description

### Field of the invention

The present invention relates in general to the field of microrobotics and, more precisely, it relates to an integrated optical microsystem, for communication and sensing to be applied into microrobots working in multi-agent systems or swarms.

The present invention regards also a method for the industrial fabrication of the mentioned microsystem.

### Background art of the invention

Microrobotics is a field of the scientific and technological research that uses microtechnologies (microelectronics, micro-optics, micromechanics) for the fabrication of miniaturized autonomous or semi-autonomous robotic systems, i.e., in its strict sense, with millimetric or sub-millimetric size.

Microrobotics has a particular relevance in the development of a relatively new scientific discipline named "Swarm Robotics". Swarm robotics can be defined as the study of how a large number of relatively simple agents can be constructed and programmed to collectively accomplish tasks that are beyond the capabilities of a single one.

Differently from other studies on multi-agent systems, swarm robotics focuses on the concepts of self-organization and bio-inspired emergent behaviours, while considering the issues of scalability and robustness. This aspect involves the use of relatively simple robots with local sensing and perception abilities, and the exploitation of scalable communication mechanisms and decentralized control strategies. It is in the perspective of miniaturization that swarm-based robotics becomes meaningful, leading to the concept of "Swarm Microrobotics".

Microrobotic swarms consist of hundreds of mobile robots, a few cubic millimetres in size. The capabilities of the single unit are consequently limited and, therefore, microrobots need to operate in very large groups or swarms to sensibly and macroscopically affect the environment.

Swarm microrobotics refers to the theories on swarm intelligence, i.e., to algorithms and strategies that allow a collective, decentralized and self-organizing behaviour of a system consisting of a large number of agents, and whose local direct and indirect interactions often lead to a global intelligent behaviour on the base of few simple basic rules (E. Bonabeau, M. Dorigo, G. Theraulaz, Swarm intelligence: from natural to artificial systems, Oxford University Press, New York, NY, 1999).

The ability to sense and to communicate is of paramount importance for large multi-agent systems. The continuous interaction with the environment and neighbours is necessary, in order to explore, perform collective tasks and share information, in particular if it is possible to do it in a selective and directional way. These aspects are capital elements both in natural swarms (e.g., insect swarms, ants and bees, flocks of birds and schools of fishes) and robotic swarms, where inter-robot communication (direct or indirect) is the base of emergent behaviours.

In its general embodiment a microrobot is composed of a locomotion module, which allows the microrobot to move in every direction on a surface, a wireless powering unit to supply energy to the microrobot, one or more micro-tools (e.g., micro-gripper, sensors, etc.) to accomplish specific tasks, a communication module in order to transmit and receive signals, and an electronic module for the control of the other onboard modules.

There are currently just few examples of microfabricated microrobotic modules, in the strict sense of the term, i.e., millimetric or sub-millimetric systems.

In particular, in the frame of the "SMART DUST" project miniaturized communication systems have been introduced (only theoretically to be applied to microrobots), which are based on a system of passive reflection of an optical signal. This system is composed of a mirror sub-system, whose direction can be controlled in order to reflect and modulate an optical beam coming from a remote source, and an active sub-system composed of a LASER emitting a beam, which is first focused and afterwards deflected with a two degree-of-freedom deflecting system, whose angle can be controlled by an applied voltage (which is generally relatively high). (L. Zhou, J. M. Kahn, and K. S. J. Pister, "Corner-Cube Retroreflectors Based on Structure-Assisted Assembly for Free-Space Optical Communication," JMEMS, VOL. 12, NO.3, 2003).

In the field of mini-robots, i.e., robots with an overall size in the order of 1-2 cm, optical communication systems have been developed on the base of Light Emitting Diodes (LEDs) and photodiodes arranged on the border area of the robot, in order to accomplish a directional communication and cooperative strategies between the robots.

Many efforts have been spent on the basic theories of swarm intelligence, on models and analysis of collective behaviour of natural swarm, e.g., insect swarms, and on the design, control and optimization of cooperative artificial systems based on the principles of the swarm intelligence, and several hardware/software systems have been proposed. On this regards, please refer, for instance, to WO0211312, US6594844, EP1390824, US5819008, US7117067 and US2006079997.

Regarding the issue of communication between microrobots, this is strongly related to the microrobot size and power available onboard. The first implies that only highly miniaturized communication systems can be integrated, while the latter imposes strict limits on communication distance capability.

There are several examples of techniques for inter-robots communication in multi-agent systems. Radio Frequency (RF) and optical communication have been so far the most applied solutions. RF communication has been extensively used down to the range of one-centimetre large robots, in a frequency band ranging from 30 MHz to 3 GHz. One of the main problems related to the integration of RF systems on very small robots, in the millimetre range, is related to the required antenna size which is able to receive the signal.

In order to reduce antenna size in the millimetre range, RF transmission around 30 GHz would be required and the use of advanced electronics is necessary.

Other drawbacks of RF communications are related to the lack of directionality and to the relatively large space required for the integration of the signal conditioning electronics.

Optical communication can be a valid alternative, especially when the robot size is limited. Optical systems offer to the robot also the capability of detecting external objects, thanks to the high directionality properties of the emitted signal. Directional communication is also of crucial importance for autonomous microrobots in order to understand the reciprocal position in the swarm.

However, so far, it has not been proposed any integrated optical microsystem devoted to duplex and directional communication and sensing and capable to be mass produced using low-cost and low-power consuming devices and standard technologies for the mass production.

It is therefore an object of the present invention to provide an integrated optical microsystem for communication and sensing to equip microrobots working in multi-agent systems or swarms, capable to generate and detect a directional signal, to be integrated in modules of millimetric or sub-millimetric size, to operate with a low power consumption and, moreover, to be fabricated with large scale industrial production.

A further object of the invention is to provide a method of industrial production of an integrated optical microsystem for communication and sensing of the above-mentioned type using mass fabrication and mass assembly processes.

### Synthesis of the invention

These objects are achieved with the integrated microsystem for communication and sensing to be applied into microrobots belonging to multi-agent systems or swarms and the relevant method of mass fabricating, whose essential features are reported in claims 1 and 11.

According to one aspect of the invention, the integrated optical microsystem comprises a support substrate to be mounted on the microrobot, a plurality of sensing units, electronically controlled and arranged along the border of the substrate and mirror means placed above the substrate at each of the sensing units, for deflecting toward these units the signals coming in from the surroundings and outwardly deflecting the signals generated by these units. In particular, each sensing unit for the communication comprises a photoemitter LED and a photodetector, such as a spectrally selective photodiode in order to filter the ambient light, the mirror means being reflective surfaces placed at each photoemitter-photodetector pair.

In a particular embodiment of the invention, the mirror means comprise a body in an optically transparent material formed on the substrate and encompassing the sensing units, the body having a central pit delimited by sloped walls, which are covered by a reflective metallic layer, the sloped walls forming the reflective surfaces.

In this way, not only it is possible to easily and rapidly form reflective surfaces suitable for the functionality of the optical microsystem, but it follows also that the optoelectronic devices, the eventual resistors and the thin electrical wires are all encompassed in the polymeric body, which consequently forms a protection for them.

According to another embodiment of the invention, the mirror means comprise a metallic or metallized polymer body placed on the centre of the substrate and formed with side walls that work as reflective surfaces.

According to a further aspect of the invention, it is provided a method for the mass production of an integrated optical microsystem of the above-mentioned type and comprising the following steps:
a. generation of a substrate;
b. integration of a plurality of photoemitter-photodetector pairs on the substrate along its border and generation of electrical connections;
c. formation of reflective surfaces at each photoemitter-photodetector pair devoted to deflect incoming signals toward them and outgoing signals emitted from the pairs themselves toward outside.

In particular, in order to form the reflective surfaces, a body in a transparent optical polymeric material is formed by a mold-casting process on the substrate, in a way to encompass the photoemitter-photodetector pairs, the body being formed with a central cavity, which is delimited by walls that are covered by a reflective layer in order to form the reflective surfaces.

Alternatively, the reflective surfaces are formed as a part of a truncated-pyramidal body made in metal or metallized polymer, which is mounted on top of the centre of the substrate and glued with the smaller base, in a way that its side walls form the reflective surfaces of the optical microsystem.

In order to mass produce the above mentioned truncated-pyramidal bodies, the following process is preferably used. Starting from a block having the shape of a parallelepiped, two arrays of through holes are formed on respectively two contiguous sides of the block, with the holes distributed on R rows and S columns, with R equal or different from S. The holes of each of the R rows on one side intersect perpendicularly the holes of the corresponding row on the other side, and the block is then cut in correspondence to each row of the holes, following planes parallel to the hole axis and in correspondence to four chords of the section of the holes, two-by-two arranged in a symmetric way with respect to the diameter, the distance between two chords placed on the same side in respect to the diameter being essentially equal to the height of the truncated-pyramidal body to be produced.

In a preferred embodiment of the invention, the substrate is a printed circuit board on which the photoemitter-photodetector pairs are mounted, and whose top electrodes are electrically connected to the substrate. In another embodiment, the photoemitter-photodetector pairs, the resistors, and eventually the microelectronics for the amplification of the signal detected by the photodiodes, and the electrical connections are all monolithically integrated as parts of the substrate by means of microelectronic processes, being the substrate itself made of materials suitable for similar processes.

### Brief description of the drawings

The characteristics and the advantages of the integrated microsystem for communication and sensing to be applied into microrobots belonging to multi-agent systems or swarms and the method for mass fabricating the same, will be apparent from the following description, regarding particular embodiments thereof which is made as a nonlimiting example with reference to the attached drawings, wherein:
Figure 1 is a schematic, perspective view of a microrobot equipped with the optical microsystem according to the invention;
figure 2 is a perspective view of the whole microsystem according to the invention;
figures 3 and 4 are side and top view respectively of the microsystem according to the invention;
figure 5 shows a perspective view of the arrangement of the optoelectronic devices for communication and sensing of the microsystem according to the invention;
figure 6 is a cross-sectional side view of an alternative embodiment of the microsystem according to the invention that adopts parabolic reflective surface;
figures 7 e 8 shows in a perspective view the bottom and top side, respectively, of a substrate used in the production method of the optical microsystem according to the invention;
figure 9 shows an array of substrates on top of which the optoelectronic devices have already been mounted;
figure 10 is a perspective view of a metallic master mold used in the fabrication method of the optical microsystem according to the invention;
figures 11, 12, 13 and 14 depict successive steps of the molding process of an array of optical microsystems according to the invention;
figures 15a,b, 16, e 17 show an alternative mold-casting technique of an array of microsystems according to the invention;
figure 18 is a perspective view of a second embodiment of the microsystem according to the invention;
figures 19, 20, 21 e 22 show the production steps of the reflective surfaces of the optical microsystem according to figure 18;
figures 23, 24, 25 e 26 schematically depict a communication strategy between microrobots equipped with the optical microsystem according to the invention.

### Detailed description of the invention

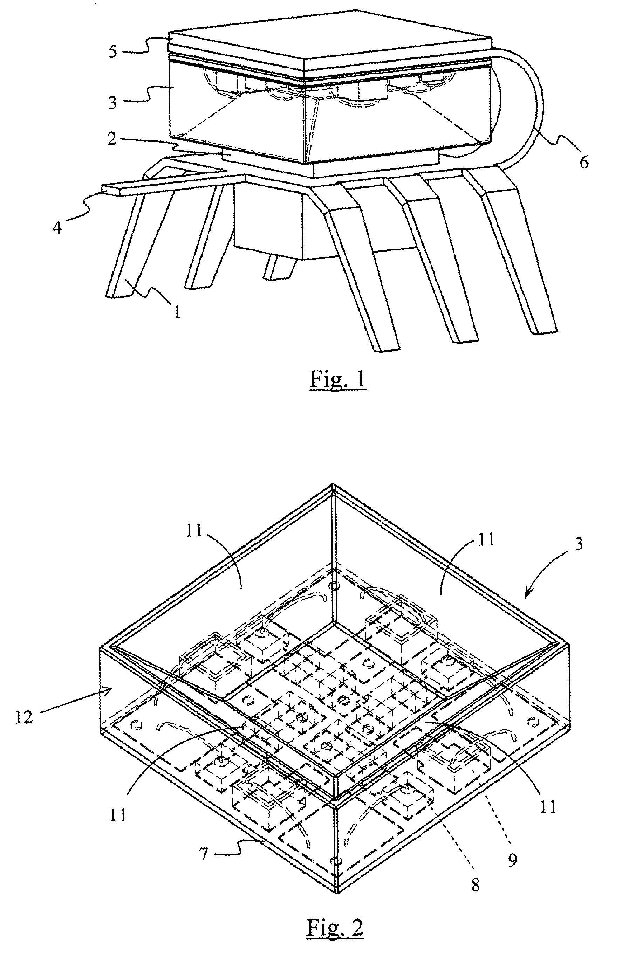

Figure 1 shows a possible embodiment of a microrobot equipped with the integrated optical microsystem according to the present invention. The microrobot comprises a stack of modules assembled together and electrically connected. In particular, the microrobot comprises a locomotion module 1, schematically illustrated as comprising of six high-frequency vibrating legs, which are independently actuated to allow forward, reverse and side movements particularly on smooth surfaces. An electronic module 2 integrating, among the others, circuits controlling the microrobot functionalities, is placed over the locomotion module 1. The optical integrated microsystem for communication and sensing according to the invention is assembled over of the electronic module 2, and it is here generically addressed with the number 3.

Moreover the microrobot is equipped with at least a micro-tool, schematically shown and indicated at 4, which protrudes from the microrobot (e.g., a vibrating antenna with an integrated feedback sensor for detecting objects or obstacles). The microrobot illustrated in figure 1 also comprises a energy scavenging system 5 which is placed over the microsystem 3, and which forms a power unit electrically connected with the electronic control circuit 2 by means of a generic flexible electrical cable 6. The locomotion module 1, the micro-tool 4, the electronic control circuit 2, the energy scavenging system 5 are here not described in more details as being out of the scope of the present invention.

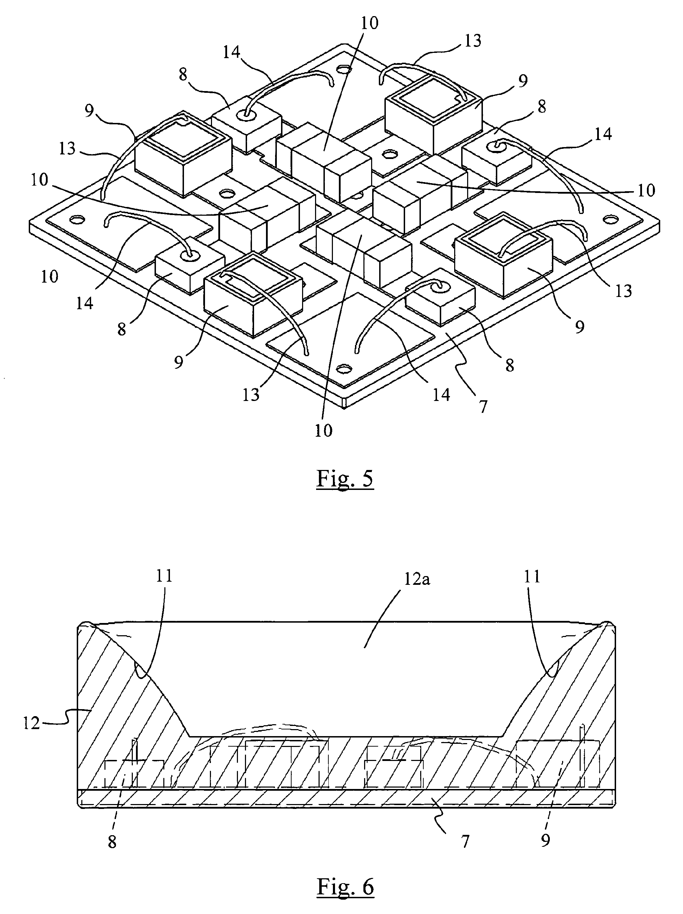

The integrated optical microsystem for communication and sensing 3 is shown in more details in figures 2, 3, 4 and 5, where it is depicted as overturned in respect to the assembly condition on the microrobot, as it is illustrated in figure 1. Referring to these figures, it comprises a plane and four-sided (squared in this case) substrate 7, on top of which the optoelectronic device for communication and sensing is mounted. More precisely, and referring in particular to figure 5 a pair of a photoemitter 8 and a photodetector 9 has been considered for integration on each border of the substrate 7. The photoemitters 8 are light emitting diodes, LEDs, while the photodetectors 9 are photodiodes, possibly spectrally selective in order to shield the ambient light (e.g., the photodiode EPC-880-0.5). The electrical connections of the top electrodes of photoemitters and photodetectors (cathode and anode respectively, in the particular embodiment here described) is produced by means of aluminium bonding wires 13 and 14. The photodetectors can be arranged as in figure, in a way that the top frame-shaped electrode allows an electrical connection with a longer wire, this feature being often requested in an automatic assembly procedure. In the centre of the substrate 7 resistors 10 can be mounted depending on the capability of the controlling circuit connected to the microsystem. These resistive elements 10, for instance SMD (Surface Mounting Device) resistors, are polarization resistors for the photoemitters, whose resistance values can be modified according to the current to be supplied to the photoemitter. If resistors are not necessary, the electrical pads of the photoemitters are directly connected to the central vias. Moreover, in place of the resistors solely, it is also possible to assembly an integrated circuit, in which both the resistors for the photoemitters and amplification stages for the photodetectors (e.g., transimpedance amplifiers) are integrated.

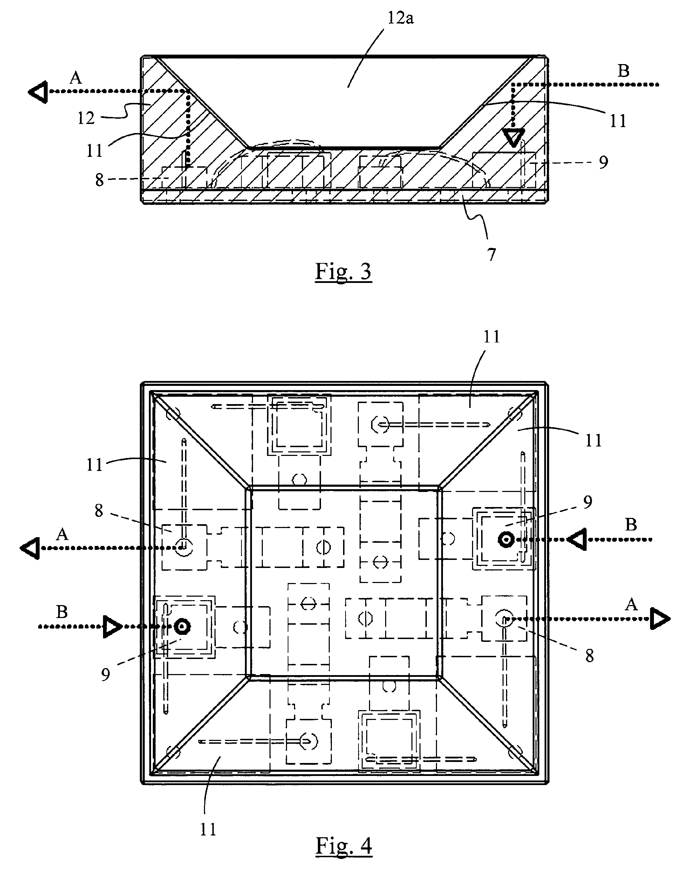

Above each pair of photoemitter 8 and photodetector 9 a reflective surface 11 is arranged, which is sloped by 45° with respect to the plane of the substrate 7, in order to deflect the optical radiation coming from the outside toward the underneath photodetector 9, and deflecting the optical radiation emitted by the photoemitter 8 toward the outside, as it is schematically depicted in figures 3 and 4.

In a preferred embodiment of the invention, the reflective surfaces 11 are limiting walls of a body in a transparent polymeric material 12 formed on the substrate 7 and encompassing the photoemitters 8 and photodetectors 9, resistors 10 and the corresponding electrical wires 13 and 14. In particular, the polymeric body consists of a four-sided block, where a pyramidal cavity 12a is formed on the opposite surface to that connected with the substrate, and whose walls are the reflective surfaces 11.

The polymer can be a transparent optical-quality epoxy resin, which can be cured by heating or Ultraviolet (UV) exposure. The polymer can be mixed with a commercially available pigment in order to make it absorbing a specific spectral band (for instance, for wavelengths shorter than 850 µm), thus to obtain a higher spectral selectivity of the system, and, consequently, a lower sensitivity to the ambient light. In order to make the surfaces 11 reflective, the sloped side walls of the cavity 12a are covered by a metallic layer (e.g., by sputtering).

Considering a perfectly smooth surface, all the optical radiation is reflected for sufficiently large striking angles, that is larger than the so called critical angle, by means of total reflection phenomena due to the difference between the refractive index of air (about 1) and that of the optical polymer (typically around 1.5). The thin metallic layer assures total reflection for striking angle narrower than the critical angle, and in the condition of a real fabricated surface, which can not offer perfect smoothness.

In the case the resistors 10 do not need to be assembled, the sloped side walls of the cavity 12a can extend down to the surface of the substrate 7, therefore creating a superior optical isolation between the sides of the optical microsystem.

The polymeric body 12 has also the important function to protect the optoelectronic components 8, 9 and 10 and of the thin electrical bonding wires 13 and 14.

Advantageously, the reflective surfaces 11 can be shaped parabolic as shown in figure 6. In this way a better focusing of the emitted and received light is obtained: according to performed simulations, a gain in transmission higher than 100% results from two parabolic-mirror modules that have been aligned at a distance of 15 mm, compared to two 45°-sloped mirror modules.

The module can be directly connected to a control unit, integrated for example in the electronics 3, capable to supply a suitable input voltage and current for the LEDs and to acquire the photogenerated current of the photodiodes (for example, with a transimpedance stage in photovoltaic mode).

The working principle of the integrated optical microsystem for communication and sensing according to the invention is illustrated in figures 3 and 4, where it is shown that the optical radiation emitted by the photoemitter 8 (marked with A) is out reflected by the above 45°-sloped or parabolic reflective surfaces 11, in a direction parallel to the floor on which the microrobots move, while the optical radiation that comes in (marked with B) is down reflected by the mirror toward the photodetector 9. The reflective surfaces 11 have also the purpose to optically separate the sides, in order to have directionality in the optical communication.

By decreasing the size of the devices mounted on the substrate, the system conceived with four sides and four reflective surfaces can be easily generalized to a microsystem having 5, 6,..., n sides and corresponding reflective surfaces, thus making possible the development of a microrobot able to transmit toward more directions. The side walls of the body 12, finally, can eventually be shaped with an appropriate lens-curvature in order to give a proper focusing to the output and input radiation.

The microsystem according to the invention is conceived in order to be mounted on a microrobot with a size of about 3 x 3 x 3 mm3, but it is virtually scalable to every size.

For this purpose, the whole system illustrated in figure 5 can be developed in a single compact structure in which the photodetectors 9, photoemitters 8, corresponding electrical connections 13 and 14, resistors 10 and eventually amplification electronics for the signal detected by the photodiodes, are all monolithically integrated in a substrate by means of Very Large Scale Integration (VLSI) planar microelectronic technology, as, for example, shown in US5883914, US5239193, US5978401. The assembly and wiring process of the discrete devices is consequently not anymore necessary and the module gains in robustness, miniaturization and mass-production feasibility. On such an integrated "chip" the polymeric body 12 or the truncated-pyramidal body 25 are respectively developed or mounted in the same way as before, with the added benefit that it is possible to make them much thinner (compatibly with the need to side-deflect or convey a certain amount of light).

In order to have an easier manufacturing and lower costs the solution with discrete devices of figure 5 comes out, but the basic idea of the microsystem consists indeed in using VLSI planar microelectronic technology for the mass production of similar optoelectronic monolithic chips, on which developing the above described mirror structure, which is now all the more so essential due to the purely planar nature of the chip developed.

The capability of the microsystem according to the invention can be enhanced further on by the integration of a micro-LASER, e.g. a VCSEL (vertical-cavity surface-emitting laser), which can be small enough to be integrated along a border side together with photoemitter and photodetector and can guarantee a very low power consumption (compatible with the available energy onboard the microrobot). The micro-LASER emits a collimated beam, giving the microrobot the capability to perform an environment scan with the light, thus working as an object proximity scanner.

The structure of the communication microsystem above described has been specifically conceived for the development by means of microfabrication processes capable of mass production. In particular, the development of the module is based on several known processes, among the other, micromachining, microassembly and, generally, microcasting and micromolding.

The steps of the development process of the microsystem are described in the following and referring to figure 5, 7 and 8.

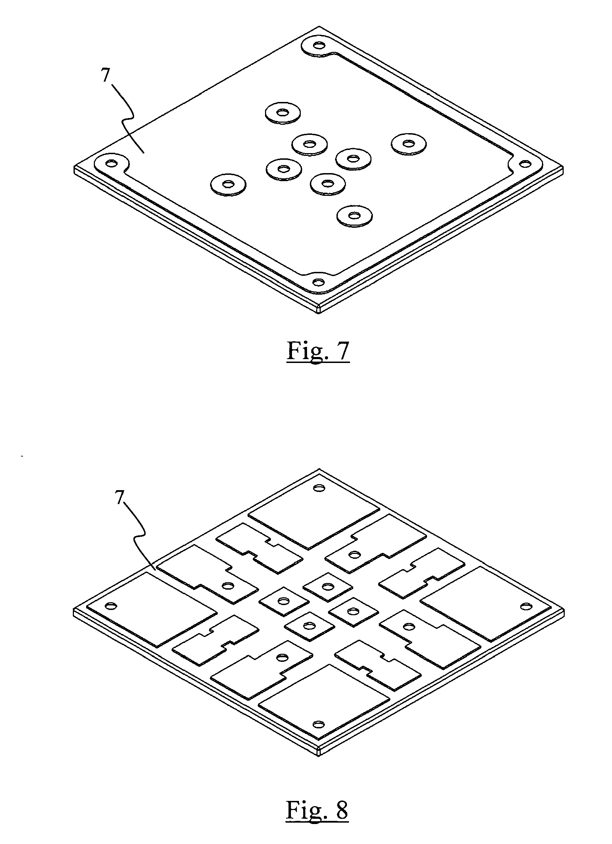

In a first step the substrates 7 are created, for example made by epoxy resin with mixed fibre glass of the FR-4 type (Flame-Retardant 4) or in Kapton. The substrate 7 is double-sided capper with a copper layout in the top side (figure 8) and electrical pads for external connection in the bottom side (figure 7), which are connected with the top side by electrical vias. The typical thickness of the substrate can range between 100 and 150 µm, while the copper layout is typically 17 µm thick with electroplated gold in order to provide a corrosion-resistant layer on copper. The fabrication of the substrate 7 is performed by means of standard industrial processes for the production of printed circuit boards (PCBs).

In a second step the SMD resistors 10 are mounted by "pick and place" automatic machine or by laser trimming of resistive paste.

In a third step the optoelectronic devices (photoemitters 8 and photodetectors 9) are glued on the corresponding pads of the substrate 7 by "pick and place" automatic machine and they are afterwards electrically connected by wire-bonding machine. The bottom electrode of the photoemitters and photodetectors is connected with the PCB pad by means of electrically conductive glue, while the top electrode (in a central position for the photoemitters and frame-shaped in the photodetectors, in the particular embodiment here illustrated) is connected to the grounded pad with thin aluminium wires 13 and 14 by means of wire-bonding.

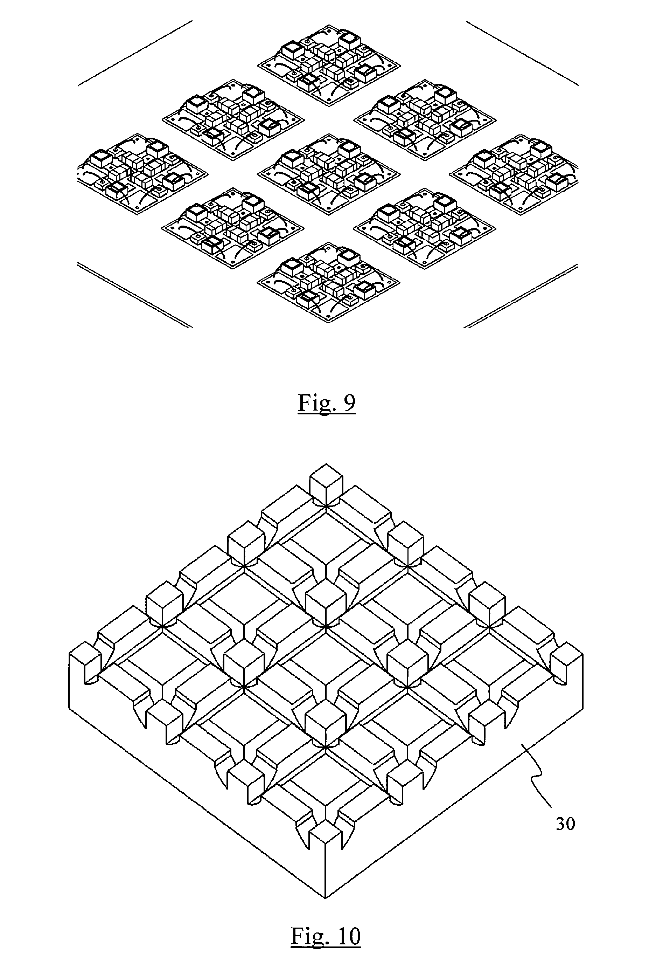

Of course, the process aimed to the mass production includes the production of N x M array of the modules, previously described, as depicted in figure 9.

In a following process step the mirror structure is produced using an optical polymer (for instance, an epoxy resin for optical application with a mixed spectrally selective pigment in order to increase the immunity of the optical module to the ambient light), which works also as packaging of the mounted devices on the substrate 7, which are encompassed in the body 12 molded on the substrate 7, to form both the reflective surfaces 11 and a physical protection to the devices themselves.

For this purpose, a master metallic mold 30 is first produced by standard or advanced precision mechanical machining and by wire- and/or spark- micro-electro-discharge machining and micro-drilling, as illustrated in figure 10. The master mold illustrated in figure 10 is obtained by micro-wire-EDM (Electro-Discharge-Machining) and it allows a high-quality mass production regarding both the sloped reflective surfaces and the side walls of the body 12. The master mold can be produced by micromachining of steel or brass, which assure a low roughness of the manufactured surfaces. The mold and the array, as that of figure 9, which includes the substrates with the mounted optoelectronic devices, are aligned by means of precision holes and steel pins.

The direct use of the metallic mold for the fabrication of the mirrors by micromolding can cause problems during the demolding step.

By using silicon-based molds it is possible to achieve molding processes that can guarantee an easier demolding. Such molds are in turn generated by casting on the master metallic mold (negative or positive). However, polymeric molds do not guarantee the same alignment precision possible with metallic molds, therefore, in this case, the necessary alignment required to mold reflective surfaces with parabolic profile is more critical. On the other hand, by choosing to generate flat reflective surfaces, which are sloped by 45°, in place of parabolic profiles, it is possible to use polymeric molds with less strict requirements concerning the alignment between the mold and the substrate, and, at the same time, it is possible to achieve a simplification in the fabrication process, at the cost of lower performances of the optical module (i.e., a lower focusing of the emitted radiation).

The use of polymers for the optical microfabrication, e.g., the poly(dimethylsiloxane) (PDMS), allows to obtain high precision and transparent molds, thereby offering the possibility to establish rapid molding techniques by UV curing, speeding up the production time (the generation of the mirror structures is instantaneous, avoiding to wait the curing time required by heat-hardening polymers).

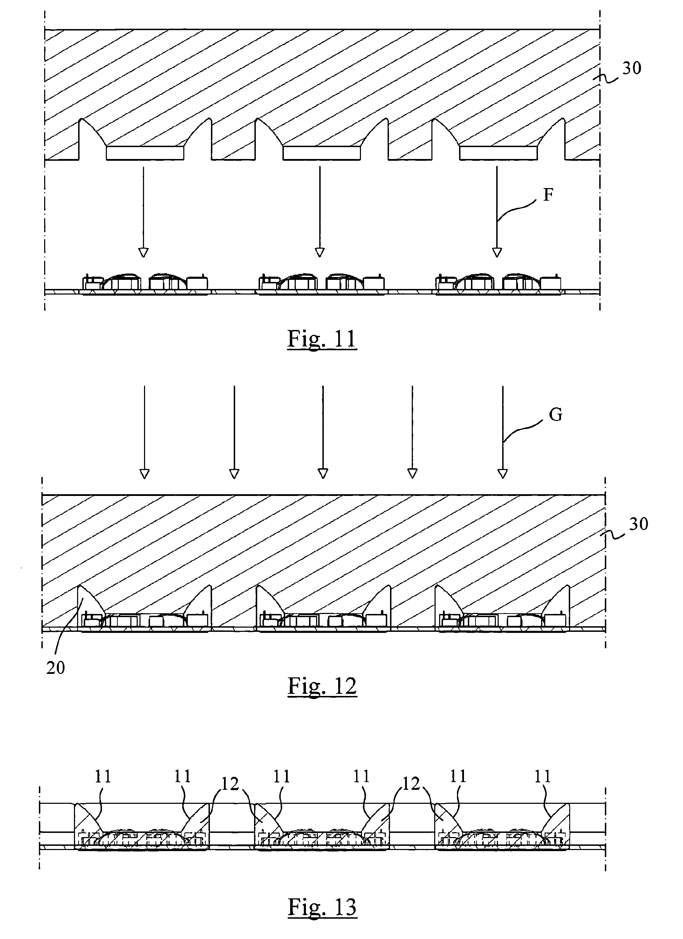

In figure 11, 12 and 13 three following steps of the molding process are illustrated. In particular, in figure 11 the mold aligned above the substrate array is shown, where the arrows F displays the moving direction of the mold toward the substrate, while in figure 12 the mold is in contact with the array. In this case, a layer of transparent epoxy or acrylic resin, or other suitable polymer, can be first deposited on the substrates in order to form a thick layer encompassing all the devices and, then, the polymeric molding is performed by pushing up the mold against the substrate under vacuum. In this way the polymeric layer distributes within the cavities 20 of the mold in figure 12 to form the reflective surfaces 11. Alternatively, it is also possible to inject the polymer through a central or side injection hole (not shown) in the mold after having placed the mold already in contact with the substrate array. The hardening of the polymer can be achieved by means of heating or UV exposure (arrows G in figure 12) depending on the nature of the polymer. With a mold transparent to the UV radiation it is possible to use polymers that can be cured instantaneously by means of UV exposure. The step following the polymer curing process and demolding is depicted in figure 13. The polymeric body 12 with parabolic reflective surfaces 11 is visible.

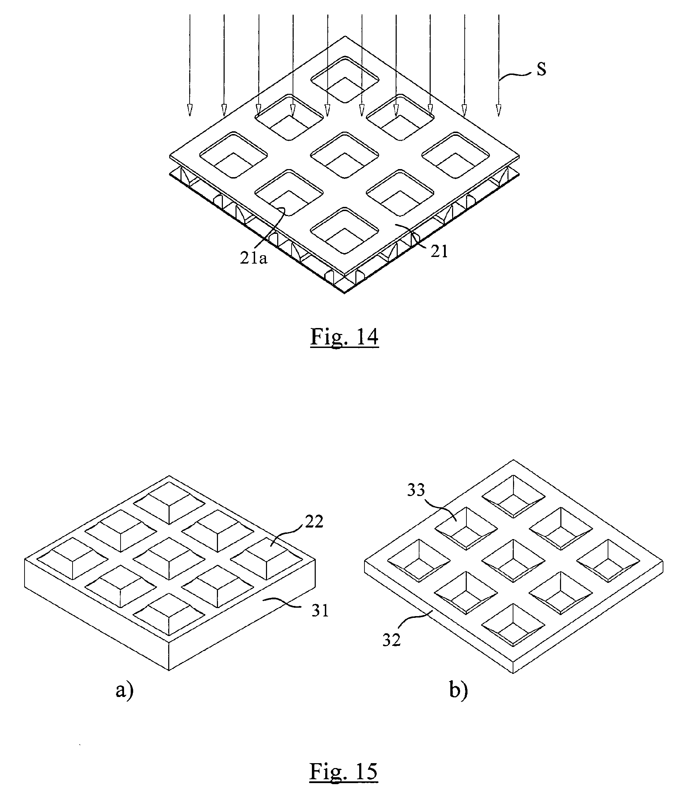

Referring to figure 14, after the demolding process a metallic mask 21 is placed over the array composed of the substrates and the polymeric bodies 12 formed thereon. The metallic mask 21 is a plate with a plurality of squared openings 21a in correspondence to the central part of the bodies 12 and the sloped walls of the cavity 12a. The whole system is therefore inserted in a sputtering machine in order to form the reflective surfaces on the sloped walls of the body 12 by means of metal sputtering (e.g., chromium, which generally features good adhesion properties on polymeric surfaces), which is represented with arrows S in figure 14.

Finally, in the last process steps, each optical microsystem is extracted from the array by means of a cut procedure with suitable tools, e.g. diamond saw blades, precision milling or eventually LASER. The areas of the side walls of the polymeric body 12 along which the cut is performed, feature generally a lower quality surface compared to the molded side walls. This affects positively the directionality performances of the optical microsystem, since these areas of the side walls scatter and disperse more the light generated by the inside photoemitters, definitely contrasting both the output side emission of each photoemitter toward the adjacent side walls, which produces interference in the inter-robot communication, and the formation of back reflected light due to total internal reflection phenomena particularly intense in these areas. Similarly, it follows that the effect of photodetection by a photodetector integrated on a side contiguous to the side to whom the optical signal is directed, is limited.

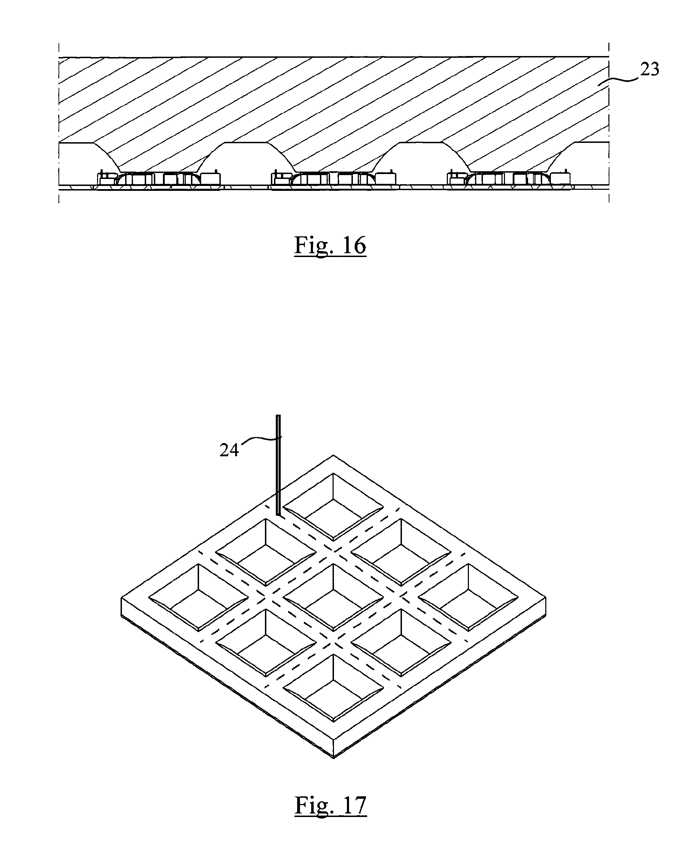

Another example of fabrication method of the optical microsystem according to the invention is illustrated in figure 15, 16, and 17. This method consists in fabricating either a negative master mold 31, as depicted in figure 15a, where a plurality of pyramidal protrusions 22 is present, or a positive master mold 32 as depicted in figure 15b, where a plurality of pyramidal cavities 33 is formed. The mold 31 can be easily fabricated (even with parabolic-profiled pyramidal protrusions) by micro-wire-EDM, while the mold 32 can be produced by spark-EDM (using the metallic mold 31 itself as a tool). In the first case, two process steps are necessary in order to form the soft negative replica mold (e.g. in PDMS, by Micro-Replica Molding) starting from the metallic negative mold, while in the second case it is necessary a single casting step (at the cost of two initial machining processes) in order to obtain the soft negative replica mold from the positive metallic one. The positive mold 32 can also be fabricated by performing a time-controlled process of wet anisotropic etching of a silicon wafer, for instance (100)-type, by using potassium hydroxide (KOH), and a mask similar to mask 21, which can limit the action of the etching chemical to squared openings of the same kind of openings 21a. As known, the pyramidal cavity 33 being formed is delimited by the sloped walls with crystallographic direction *(111)*, which form an angle of 54.74° with the flat surface of the silicon wafer. By means of computer simulations, it has been found that the performances of the optical microsystem with reflective surfaces with an inclination of 54.74° are still acceptable. Nevertheless, it is also possible to form angles closer to 45° using different chemicals and techniques that are known in the field of silicon-based processes. The so manufactured silicon mold allows the production of reflective surfaces (11) with a very high quality (much better to those obtained with metallic molding manufactured by EDM). A similar technique is described in JP2006106753. Eventually, the negative mold 31 can be directly used to mold the polymeric body 12, because the demolding step can be in this case more easier due to the lower complexity of the mold itself. As shown in figure 15, the mold 23, which is derived from the masters of figure 15, is placed over the substrate array with photoemitters and photodetectors that align the truncated-pyramidal protrusions 22 at the centre of each region where the devices are mounted. The under filling of the polymer can be performed in the same ways above described. It will be noted that in this way the mold forms only the cavities 12a delimited by the sloped walls, but not the side walls of the body 12; therefore, after a similar previously described sputtering process, the single modules need to be separated from the array by cut, as depicted in figure 17, by means of a suitable tool 24, capable to form the side walls as smooth and transparent as possible. A LASER beam, for instance, allows to achieve a high optical quality of the surfaces and a perfect alignment between the side walls of the substrate and those of the polymeric body 12. It is obviously necessary that the LASER wavelength is absorbed by the polymer (which is optically transparent for the used communication wavelength and, generally, for a relatively wide spectral band). A LASER in the spectral region of the UV, for instance, will be particularly suitable for those polymers that cure by UV exposure.

For the purpose of assembly the optical microsystem on other microrobotic modules are shown in figure 1, the presence of the cavity 12a eventually allows to house another module, optimizing the assembly and decreasing the volume of the whole microrobot. However, depending on the particular assembly process and the modules to be assembled, a flat surface could be preferable in place of the mentioned pyramidal cavity. For this purpose, after the metallization step of the sloped walls 11 and before the final cut process, it is possible to use a thin mask 21 in order to deposit a new amount of polymer in the cavity 12a, which can be cured by heating or UV; flushing the deposited polymer by means of a flat and eventually transparent plate to be positioned on said mask; curing the polymer by means of heating or UV exposure. In this way an optical microsystem with the shape as a parallelepiped and flat surfaces is finally produced.

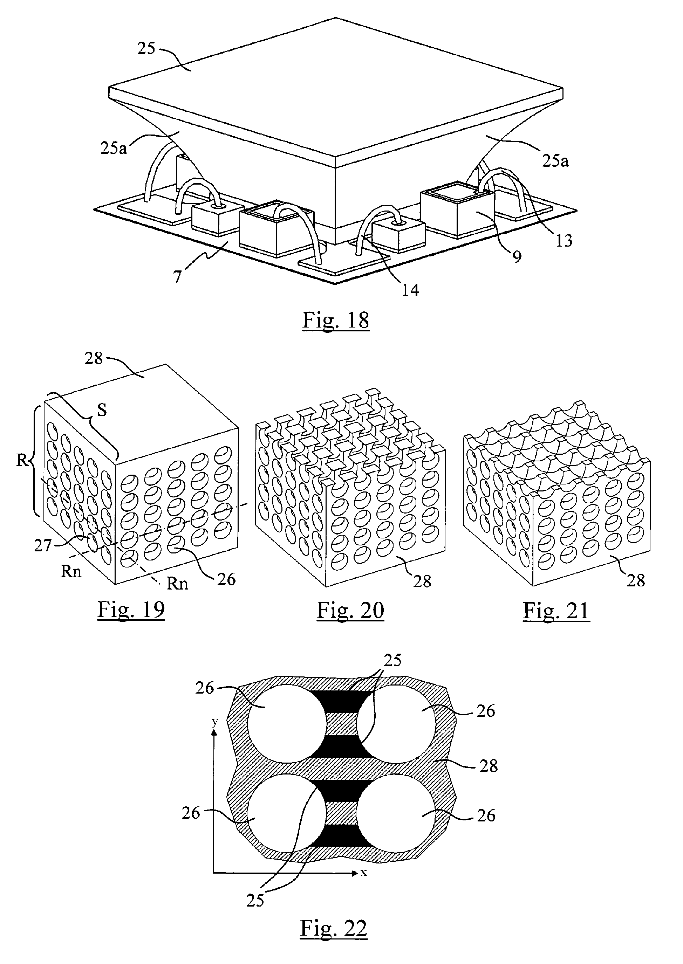

In figure 18 an alternative embodiment of the optical microsystem according to the invention is shown, which is possible when any assembly of resistors 10 or electronics in the centre of the substrate is not necessary, being integrated in a control module external to the optical microsystem, or in the case of the monolithic optoelectronic chip. In this particular embodiment, the reflective surfaces are not part of the polymeric structure 12, but they are part of a small metallic block 25 or a small metallized polymeric block, which has a truncated-pyramidal structure that is overturned and glued with the smaller base to the substrate 7. The assembly of the block 25 can be easily performed by automatic "pick and place" machines. The side walls 25a of the small block 25 are in this case the reflective surfaces of the optical microsystem and they can be straightforwardly fabricated with parabolic profile, as illustrated.

This solution features the advantages of a more uniform and intense radiation emission because no refraction, bulk scattering and absorption effects are here present, because light does not propagate here through the polymer. Moreover, its fabrication is easier. On the other hand, the whole system is heavier, there is no free space on the centre of the substrate and a careful handling is required because there is no any protection of the optoelectronic devices 7 and 8 and corresponding wires 13 and 14.

The mass production method of the block 25 is illustrated in figure 19-22.

Considering that each small block 25 can be produced by cut of truncated-pyramidal blocks from a body like that depicted in figure 15a,b, or even by polymer casting in the cavities 33 and successive metallization, a faster and cheaper method consists in performing a first and second plurality of through-holes 26 and 27, which are perpendicular to two contiguous sides of a cubic metallic block 28, as illustrated in figure 19. Practically, on each of the two sides a through-hole array with R rows and S columns is formed with the holes perpendicular to the corresponding sides. The holes of each row Rn of a side intersect the holes of the corresponding row Rn of the other side.

The diameter of the drilling tip for manufacturing the holes 26 and 27 is determined in order to have the curvature that most fits the desired parabolic profile. The size of the hole array depends on the achievable depth of the drilling tip, which in turn is generally limited by the diameter of the tip itself.

Afterwards the block 28 is cut in slices perpendicularly to the sides on which the holes have been performed and with a thickness that is determined by the size of the cutting tool. In practice, for each row R of holes 26 and 27 four cuts are performed following parallel planes to the hole axis and in correspondence of four chords of the hole section, which are two by two placed symmetrically in respect to the diameter, in order to make the distance between two chords, which are situated on the same side in respect to the diameter, essentially equal to the height of the small blocks 25.

With a first cut the larger bases of the small blocks 25 are exposed, as it is visible in figure 20, where it is shown a block 28 on which an array of 4 x 4 small blocks 25 is formed. In the figure the small blocks 25 are still joined to the metallic block 28 by their smaller base. With a further cut the first array of small blocks 25 is separated, exposing the second array of small blocks 25 joined to the metal block 28, this time by the larger bases, as illustrated in figure 21. By means of further cuts it is possible to separate one by one the other arrays of small blocks 25. Figure 22 depicts a partial cross-sectional side view of the block 28 where the small blocks 25 (black coloured) are visible inside the metallic block 28. Referring to the coordinate system here illustrated, the distance between holes in the x direction has been fixed as a function of the size of each small blocks 25, while the height of the small blocks 25 and the size of the cutting tool fix the distance between the holes in the y direction. The drilling process allows also to obtain a good surface quality of the reflective surfaces of the small blocks 25.

In order to avoid to loose the small blocks 25 during the cut process, the holed metallic block 28 can be filled with wax, which is melted afterwards.

As an example, with a metallic block 28 of 26 x 26 x X mm3 it is possible to produce about 16 x (X/5 x 2) small blocks 25 with a size of 3 x 3 x 1 mm3 and a radius of curvature of 1,8 mm. If, for instance, X=160 mm, up to 1024 small blocks 25 can be fabricated. In this case, the method consists in doing an array of 5 x X holes with a diameter of 3,6 mm and a depth of 26 mm in two successive sides of the metallic block as it is illustrated in figure 19, and then to cut with a tool with a thickness of 1 mm.

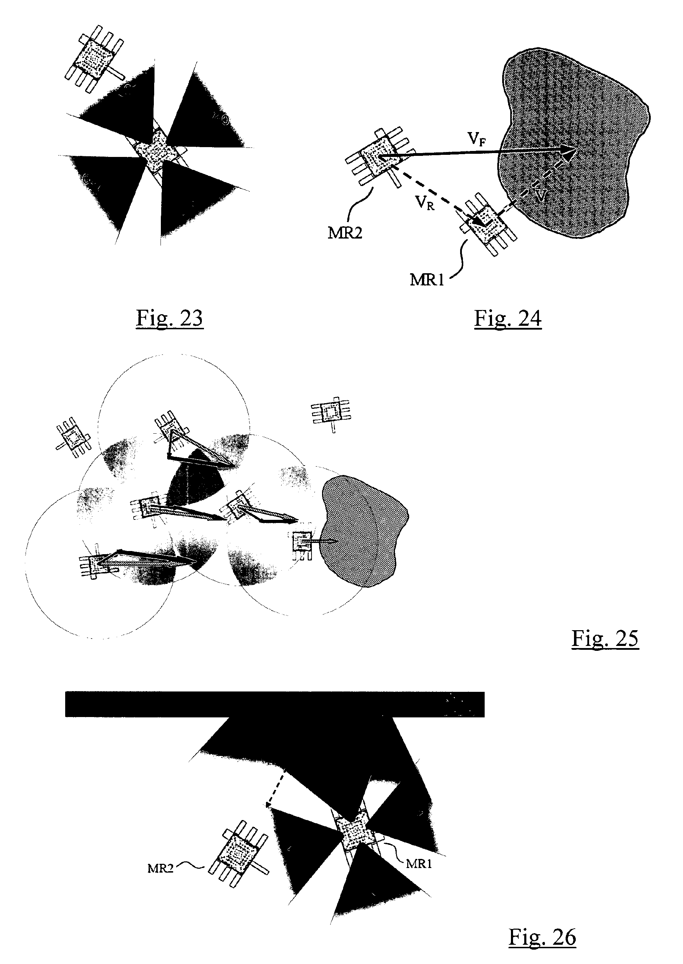

The structure of the optical microsystem according to the invention allows not only an omnidirectional optical communication between microrobots, but also the detection of the presence, position and orientation of the surrounding microrobots. During communication each LED belonging to one microrobot is identified with a particular bit string (for instance, in the case of four LEDs, two-bit strings are enough: 00, 01, 10, 11) that is included in the bit packet for high level communication, as shown in figure 23. This technique allows receiving microrobots to understand not only the position but also the relative orientation of the transmitting microrobots. The distribution of photodetectors along the borders of the microrobots allows a comparison of the received light intensities of a same signal, thus allowing a more accurate detection of the position and orientation of the transmitting microrobot.

A strategy that allows both collision avoidance between microrobots and a cooperative behaviour without any external supervision, can be realized on the base of this method, as illustrated in figue 24 (vectorial sum for reconstructing the direction to target or obstacle) and figure 25 (which is an example of swarm formation induced by vector propagation). A similar techique is described in WO0211312.

The cooperative strategy among the microrobots is based on the following steps. In figure 24 it is depicted a situation in which a microrobot MR1 has found a target or obstacle and a microrobot MR2 has entered MR1's communication range. In a more general configuration, the microrobot MRN+1 needs to know:
A. the relative direction of the microrobot MRN (automatically understood in signal detection);
B. the relative orientation of the microrobot MRN (received by bits communication);
C. the target direction vector with reference to the microrobot MRN (received by bits communication).

Combination of points B and C transposes the vector of the target from the reference of the microrobot MRN to the reference of the microrobot MRN+1. In this way the vector named V in figure 24 is acquired from the microrobot MRN+1 relatively to its own reference system. The final vector VF for the target direction is obtained by doing a vector sum of the components of the calculated vector V and the vector VR, introduced in point A. This allows each microrobot to know both the direction and the distance to the target. In figure 25 an example of the propagation of this strategy to several members of the swarm and the formation of a vector trail is illustrated (the vector length is arbitrary). This strategy allows to broadcast the information within the swarm, creating a communication pattern that will extend in time, thus increasing progressively the probability that other microrobots could meet it and, therefore, receive information.

From the foregoing, it clearly results that, although being simple and minimal, the optical microsystem according to the invention offers the possibility of a duplex and directional communication, allowing the development of communication and perception strategies in multi-agent systems and swarms, suitable to move on flat surfaces. Each LED, in fact, can emit an unambiguous signal string that can mark its own position on the microrobot (i.e., forward, rear, right-side or left-side LED), allowing the receiving microrobot to understand the relative orientation of the transmitting microrobot, its motion direction, and eventually to calculate by vector computation a particular information of direction sent by the transmitting microrobot. The optical microsystem according to the invention is not only a communication module but also a perception passive sensor for detection of the presence and relative position of other microrobots and it can also work as active sensor for the recognition of obstacles by means of emission and detection of its own light reflected by the obstacle itself, or by means of "cooperative" techniques between two (or more) microrobots, as illustrated in figure 26, where a first microrobot MR1 serially emits optical signals while a second microrobot MR2 detects them also reflected by the close obstacle, allowing in this way to understand the presence and position of the mentioned obstacle by means of analysis and comparison of the optical signals detected by its photodetectors.

Modifications and/or changes may be made to the optical microsystem for communication and sensing according to the present invention and mass production method therefor, without departing from the scope of the invention as defined by the appended claims.

## Claims

1. An integrated optical microsystem for communication and sensing to be applied into autonomous mobile microrobots belonging to multi-agent systems or swarms, **characterized in that** it comprises a substrate (7) suitable to be mounted on said microrobot, a plurality of sensing units (8, 9) electronically controlled and arranged along the borders of said substrate and mirror means (11) arranged on said substrate in correspondence of each sensing unit for directing signal coming from the outside towards these units and signals emitted by these units towards the outside.

2. Microsystem according to claim 1, wherein each of the mentioned sensing units consists of a photoemitter (8) and a photodetector (9) put side by side.

3. Microsystem according to claim 2, wherein each photoemitter (8) is an optical radiation emitting diode, the photodetector (9) being a photodiode spectrally selective in order to shield the ambient light.

4. Microsystem according to anyone of the previous claims, wherein said mirror means are reflective surfaces (11) placed in correspondence of each photoemitter-photodetector pair (8, 9).

5. Microsystem according to anyone of the previous claims, wherein said mirror means comprise a body (12) made in a transparent optical material formed above said substrate (7) and encompassing said sensing units (8, 9), said body being formed with a central cavity (12a) delimited by sloped walls that are covered by a reflective metalic layer, said sloped walls forming said reflective surfaces (11).

6. Microsystem according to claim 5, wherein said optically reflective material is a heat or UV curable polymer added with a pigment to make it absorbing a prefixed range of the light spectrum and filtering the ambient light.

7. Microsystem according to anyone of the previous claims, wherein resistive elements (10) for controlling the current applied to the photoemitters (8) or an integrated circuit with resistors for the photoemitters (8) and amplification steps for the photodetectors (9) are arranged at the centre of said substrate (7).

8. Microsystem according to anyone of the claims 1 to 4, wherein said mirror means (11) comprise a metallic or metallized polymer body (25) mounted at the centre of said substrate (7) and having side walls (25a) forming said reflective surfaces.

9. Microsystem according to anyone of the previous claims, wherin said substrate is a substrate for printed circuit boards on which the photoemitter-photodetector pairs (8, 9) and the resistive elements (10) are integrated.

10. Microsystem according to anyone of the previous claims, wherein a microlaser is provided together with at least a pair of photoemitter-photodetector (8, 9).

11. A method for the mass production of an integrated optical microsystem for communication and sensing to be applied into autonomous mobile microrobots belonging to multi-agent systems or swarms **characterized in that** it comprises the following steps:
a. generation of a substrate (7);
b. integration of a plurality of photoemitter-photodetector pairs (8,9) along the border of the substrate and formation of the relevant electrical connections;
c. formation of reflective surfaces (11) in correspondence with each photoemitter-photodetector pairs (8, 9) for directing signals coming from the outside towards said pairs and signals generated by said pairs towards the outside.

12. Method according to claim 11, wherein said substrate (7) is a printed circuit board on which a plurality of photoemitter-photodetector pairs (8, 9) are mounted along the perimetral border of the substrate (7), the top electrodes of said photoemitter-photodetector pairs being electrically connected to said substrate (7).

13. Method according to claim 11, wherein said photoemitter-photodetector pairs (8, 9), resistors (10), possible amplification microelectronic circuit for the signal coming from the photodetectors (9) and electrical connections (13, 14) are made monolithically as a part of said substrate with microelectronic fabrication processes, said substrate being made of a material such as to allow said microelectronic fabrication processes to carry out.

14. Method according to anyone of the claims 11-13, wherein said step of formation of reflective surfaces (11) comprises the steps of:
a. forming by moulding a body (12) made of an optically transparent polymeric material on said substrate (7) in such a way to encompass said photoemitter-photodetector pairs (8, 9), said body (12) being formed with a central cavity (12a) delimited by walls;
b. covering said walls with a layer of reflective material to form said reflective surfaces (11).

15. Method according to claims 11 or 12, wherein resistive elements (10) for each of said photoemitters (8) or a circuit with resistors of the photoemitters (8) and amplification steps for the photodetectors (9) are integrated at the centre of said substrate.

16. Method according to anyone of the claims 11 to 15, wherein a microlaser is provided together with at least one of the photoemitter-photodetector pairs (8, 9).

17. Method according to anyone of the claims 11 to 15, wherein said polymeric material is a heat or UV curable polymer and the molding step comprises a step in which said body is exposed to heat of UV radiation.

18. Microsystem according to anyone of the claims 11 to 15, wherein an array N x M of said substrates (7) is formed, said photoemitter-photodetector pairs (8, 9) being integrated on said substrates, and in that a multiple mold (30) is formed to form said body (12) made of polymeric material on each substrate of said array, a final step being provided in which each substrate with the relevant polymeric body thereof is separated by cutting.

19. Method according to claim 11, wherein the step of formation of reflective surfaces (11) comprises the steps of:
a. forming a truncated-pyramidal body (25) made of metal or metallized polymer;
b. mounting said body (25) at the centre of said substrate (7) and fixing said body to said substrate with its smaller base.

20. Method according to claim 19, wherein said truncated-pyramidal body (25) has a four-sided section and is produced in a multiplicity of equal items from a parallelepipedal block (28) defining at least two adjacent faces, an array of through holes (26, 27) being formed on each of said faces, said holes being perpendicular to said faces and arranged on R rows S colunms, R being equal or different to S, the holes of each of said R rows of one face intersecting the holes of the corresponding row of holes formed on the other face, said block (28) being then cut at each row of holes along planes parallel to the axes of the holes and containing respective chords of the cross-section of said holes, said chords being two-by-two symmetrically placed with respect to the hole diameter, the distance between the two chords situated at the same part with respect to the diameter being essentially equal to the height of said body (25).

21. Method according to anyone of the claims 11 to 20, wherein said reflective surfaces are sloped of an angle of 45°.

22. Method according to anyone of the claims 11 to 20, wherein said reflective surfaces are formed with a substantially parabolic profile.
